# EUROPÄISCHE PATENTSCHRIFT

(11) **EP 3 335 937 B1**
(45) Veröffentlichungstag und Bekanntmachung des Hinweises auf die Patenterteilung: **15.01.2020**
(21) Anmeldenummer: 17204829.0
(22) Anmeldetag: 01.12.2017
(51) Int. Cl.: B60R 1/00, H04N 7/18

(54) **KAMERASYSTEM UND SPIEGELERSATZSYSTEM**
CAMERA SYSTEM AND MIRROR REPLACEMENT SYSTEM
SYSTÈME DE CAMÉRA ET SYSTÈME DE REMPLACEMENT DE MIROIR

(30) Priorität: 16.12.2016 DE 102016124691
(43) Veröffentlichungstag der Anmeldung: 20.06.2018
(73) Patentinhaber: MEKRA Lang GmbH & Co. KG, 91465 Ergersheim (DE)
(72) Erfinder: Lang, Werner, 91465 Ergersheim (DE); Geißendörfer, Peter, 91605 Gallmersgarten (DE); Deffner, Simon, 91604 Flachslanden (DE); Heger, Sebastian, 91478 Markt Nordheim (DE); Schneider, Florian, 91619 Obernzenn (DE)
(74) Vertreter: Kramer Barske Schmidtchen Patentanwälte PartG mbB

(56) Entgegenhaltungen:
- DE-A1-102013 021 818
- US-A1- 2015 296 200
- US-A1- 2016 268 716

## Beschreibung

Die vorliegende Erfindung betrifft allgemein ein Kamerasystem für ein Fahrzeug, insbesondere ein Nutzfahrzeug, und ein Spiegelersatzsystem mit einem Kamerasystem.

Bei Kraftfahrzeugen sind abhängig von dem Typ des Kraftfahrzeugs, wie beispielsweise Krafträdern, Kraftfahrzeugen zur Personenbeförderung, Kraftfahrzeugen zur Güterbeförderung, usw. sogenannte Sichtfelder gesetzlich vorgegeben, welche durch eine Einrichtung für indirekte Sicht abgebildet werden müssen und durch den auf einem Fahrersitz sitzenden Fahrer jederzeit über die Einrichtung für indirekte Sicht einsehbar sein müssen. Gewöhnlicher Weise werden die Einrichtungen für indirekte Sicht durch Spiegel gebildet.

In letzter Zeit werden solche Einrichtungen für indirekte Sicht zunehmend durch Kameras bzw. Bildaufnahmeeinheiten ersetzt und/oder ergänzt, die derart ausgebildet sind, dass eine außen am Fahrzeug angebrachte Kamera ein Bild von der Umgebung des Fahrzeugs aufnimmt und das Bild, ggf. nach Bildbearbeitung, auf einer im Innenraum des Fahrzeugs angebrachten Anzeigeeinrichtung für den Fahrer einsehbar dargestellt wird.

Bei herkömmlichen Kamerasystemen kann die Kamera neben dem Aufnehmen von Bildern noch weitere Zusatzfunktionen aufweisen, die von sogenannten Funktionseinheiten bereitgestellt werden und mitunter von der Betriebsart des Fahrzeugs abhängig sein können. Beispielsweise kann eine Rückfahrkamera sich bei Einlegen eines Rückwärtsganges einschalten, sich eine Infrarot (IR)-Beleuchtung einer Kamera sich bei einsetzender Dämmerung, die von einem Lichtsensor ermittelt wird, einschalten oder ein Bildausschnitt bei einer durch ein Blinksignal angezeigten Kurvenfahrt vergrößert dargestellt werden. Dazu wird bei solch herkömmlichen Kamerasystemen sowohl die Kamera als auch die entsprechende Funktionseinheit separat mit einer Steuereinheit bzw. der Steuerelektronik einer Steuereinheit verbunden, so dass sowohl die Kamera als auch die Funktionseinheit von der Steuereinheit getrennt angesteuert werden. Eine solche getrennte Ansteuerung führt dazu, dass ein entsprechendes Kamerasystem durch eine Vielzahl von doppelten Systemkomponenten, wie Kabeln, Leitungen und Steuerelektronikmodulen, einen komplexen Aufbau aufweist.

Ferner sind in der Regel am Fahrzeug weitere Funktionseinheiten vorgesehen, die zwar unter Umständen in räumlicher Nähe zu der Aufnahmeeinheit des Kamerasystems vorgesehen sind, die Funktion des Kamerasystems aber nicht betreffen, wie z.B. Blinker, verschiedene Sensoren (Abstandssensor, Regensensor) etc. Auch diese weisen in der Regel eigene Systemkomponenten zur Versorgung der Komponenten von einer Steuereinheit her auf, so dass die im Fahrzeug vorgesehenen Versorgungskomponenten für das Kamerasystem und solche Funktionseinheiten, wie Leitungen, oftmals für mehrere Komponenten jeweils einzeln und damit parallel verlaufend vorgesehen sind.

Kamerasysteme sind beispielsweise aus der US 2015/0296200 A1, der US 2016/0268716 A1 und der DE 10 2013 021 818 A1 bekannt. Das Dokument US2015/0296200 A1 offenbart ein Kamerasystem nach dem Oberbegriff des Anspruchs 1.

Es ist daher Aufgabe der Erfindung ein Kamerasystem bereitzustellen, das einen einfachen Aufbau aufweist und bei welchem bei Versagen einzelner Komponenten ein einfacher Austausch möglich ist.

Diese Aufgabe wird durch ein Kamerasystem mit den Merkmalen nach Anspruch 1 und ein Spiegelersatzsystem mit den Merkmalen nach Anspruch 15 gelöst. Bevorzugte Ausführungsformen sind in den Unteransprüchen angegeben.

Der Erfindung liegt die Idee zugrunde, wenigstens eine Funktionseinheit mit einer Bildaufnahmeeinheit eines Fahrzeugs derart zu koppeln, dass ein Steuersignal zumindest zu einem Teil zum Ansteuern der Bildaufnahmeeinheit und auch mit einem anderen oder demselben Teil zum Ansteuern der Funktionseinheit genutzt wird. Die Steuereinheit gibt somit ein Steuersignal aus, das sowohl die Bildaufnahmeeinheit als auch die Funktionseinheit steuert. Dieses Steuersignal kann auch aus zwei oder mehreren, z.B. ursprünglich getrennten, Steuersignalen bestehen, die aus derselben oder aus verschiedenen der einen oder mehreren Steuereinheiten ausgegeben werden, d. h. es kann z.B. ein separates Steuersignal für die Bildaufnahmeeinheit und ein separates Steuersignal für eine Funktionseinheit als "das Steuersignal" vorgesehen sein. Wenn die Steuereinheit mehrere Untereinheiten umfasst bzw. mehrere Steuereinheiten vorgesehen sind, können diese im Fahrzeug kombiniert angeordnet (z.B. in einem Bordcomputer) oder als ggf. räumlich und physikalisch getrennte Einheiten vorgesehen sein. Sowohl die Steuerung der Bildaufnahmeeinheit als auch die Steuerung der Funktionseinheit erfolgt folglich über das von der einen oder mehreren Steuereinheiten ausgegebene Steuersignal.

Die wenigstens eine Funktionseinheit ist angepasst, Fahrzeugfunktionen auszuführen. Allgemein kann gesagt werden, dass der Begriff "Fahrzeugfunktion" alle Funktionen eines Fahrzeugs umfasst, die am, um und/oder in dem Fahrzeug erfolgen, wie beispielsweise Fahrzeugbeleuchtungsfunktion, Fahrzeugsignalfunktion (z.B. Blinker, Hupe), Bremsfunktion/Beschleunigungsfunktion, etc. Auch Hilfsfunktionen für diverse am Fahrzeug angebrachte Bauteile, wie z.B. eine Ausleuchtung für eine Kamera, ist eine Fahrzeugfunktion in diesem Sinne. Zum Übertragen des von der Steuereinheit ausgegebenen Steuersignals ist eine Funktionsschnittstelle zwischen der wenigsten einen Bildaufnahmeeinheit und der wenigstens einen Funktionseinheit vorgesehen, über die die wenigstens eine Bildaufnahmeeinheit und die wenigstens eine Funktionseinheit miteinander koppelbar und voneinander entkoppelbar sind. Im Falle eines Defekts entweder der Bildaufnahmeeinheit oder der Funktionseinheit können beide Einheiten somit auch getrennt voneinander betrieben werden. Insbesondere ist für die Ansteuerung des Kamerasystems und der mindestens einen Funktionseinheit nur ein gemeinsames Leitungs- bzw. Verdrahtungs- oder Übertragungssystem erforderlich. Somit wird die wenigstens eine Funktionseinheit von einem Signal gesteuert, dass durch die Aufnahmeeinheit hindurch geleitet wird und damit an die wenigstens eine Funktionseinheit übertragen wird.

Das aus der Steuereinheit ausgegebene Steuersignal wird durch die Bildaufnahmeeinheit hindurch zu der Funktionseinheit übertragen.

Wenn die wenigstens eine Funktionseinheit über ein Steuersignal gesteuert wird, das auch die Bildaufnahmeeinheit steuert und das von der Bildaufnahmeeinheit an die jeweilige Funktionseinheit weitergegeben wird, kann die Anzahl von Systemkomponenten im Vergleich zu herkömmlichen Kamerasystemen wesentlich reduziert werden und so ein Kamerasystem mit einem einfachen und zugleich kompakten Aufbau bereit gestellt werden, das dadurch geringe Systemkosten aufweist, da Kabel bzw. Leitungen und Steuerelektronikmodule gegenüber herkömmlichen Kamerasystemen eingespart bzw. reduziert sind.

Zusätzlich oder alternativ ist die wenigstens eine Steuereinheit angepasst zum Ausgeben und Empfangen von wenigstens einem Videosignal, was es ermöglicht, das Videosignal von der Bildaufnahmeeinrichtung über die Steuereinheit an die Bildwiedergabeeinrichtung zu übertragen. Dies hat den Vorteil, dass die Steuereinheit eine Bearbeitung des Videosignals, wie beispielsweise eine Komprimierung der übermittelten Daten, vornehmen kann und so für die Wiedergabe der Videodaten auf der Bildwiedergabeeinheit vorteilhafte Signale ausgeben kann.

Vorzugsweise ist in dem Kamerasystem wenigstens eine Aufnahmeschnittstelle zwischen der Steuereinheit und der Bildaufnahmeeinheit vorgesehen, die angepasst ist zum Übertragen des wenigstens einen Videosignals von der Bildaufnahmeeinheit zu der Steuereinheit und zum Übertragen wenigstens eines Steuersignals von der Steuereinheit zu der Bildaufnahmeeinheit. Durch die Aufnahmeschnittstelle wird eine stabile und zuverlässige Signalübertragung ermöglicht.

Vorteilhafter Weise ist wenigstens eine Aufnahmeschnittstelle zwischen der Bildaufnahmeeinheit und der Bildwiedergabeeinheit vorgesehen ist, die angepasst ist zum Übertragen des wenigstens einen Videosignals von der Bildaufnahmeeinheit zu der Bildwiedergabeeinheit und zum Übertragen wenigstens eines Steuersignals von der Bildwiedergabeeinheit zu der Bildaufnahmeeinheit.

In einer vorteilhaften Ausführungsform sind die wenigstens zwei Schnittstellen zum getrennten Übertragen von Steuersignalen an die wenigstens eine Steuereinheit und von Videosignalen an die Bildwiedergabeeinheit angepasst. Getrennte Schnittstellen für die Übertragung von sowohl Video- als auch Steuersignalen ermöglicht einen flexiblen Aufbau sowie eine einfachere Wartung des Kamerasystems.

In einer anderen, alternativen Ausführungsform sind die wenigstens eine gemeinsame Schnittstelle zum Übertragen von Steuersignalen an die wenigstens eine Steuereinheit und von Videosignalen an die wenigstens eine Bildwiedergabeeinheit angepasst. Eine gemeinsame Schnittstelle für die Übertragung von sowohl Video- als auch Steuersignalen spart Bauraum und ermöglicht so ein kompaktes Kamerasystem.

In einer anderen Ausführungsform, die nicht Teil der beanspruchten Erfindung ist, ist die Steuereinheit in die Bildaufnahmeeinheit integriert, was nicht nur Bauraum spart und damit eine kompakte Ausbildung des gesamten Kamerasystems ermöglicht, sondern auch die wenigstens eine Aufnahmeschnittstelle überflüssig macht und so zu einem kompakten und zuverlässigerem Kamerasystem führt. Gleichzeitig können dadurch gleiche Komponenten der Steuereinheit und der Bildaufnahmeeinheit in einer entsprechenden gemeinsamen Komponente vorgesehen werden, was das Kamerasystem kostengünstig macht. Das Vorsehen der Steuereinheit in der Bildaufnahmeeinheit ist vor allem dann günstig, wenn die Funktionseinheit eine mit der Kamerafunktion gekoppelte Funktion ausführt, wie z.B. eine Beleuchtung des Aufnahmegebiets der Kamera.

Vorzugsweise weist das Kamerasystem ferner wenigstens eine Wiedergabeschnittstelle zwischen der Steuereinheit und der Bildwiedergabeeinheit auf, die angepasst ist zum Übertragen wenigstens eines Videosignals von der Steuereinheit zu der Bildwiedergabeeinheit. Durch die Wiedergabeschnittstelle wird eine stabile und zuverlässige Signalübertragung ermöglicht.

Bevorzugter Weise weist das Kamerasystem wenigstens zwei Funktionsschnittstellen auf, wobei die wenigstens zwei Funktionsschnittstellen elektrisch und/oder signaltechnisch und/oder mechanisch kompatibel sind. Zusätzlich oder alternativ weist das Kamerasystem wenigstens zwei Aufnahmeschnittstellen auf, wobei die wenigstens zwei Aufnahmeschnittstellen elektrisch und/oder signaltechnisch und/oder mechanisch kompatibel sind. Weiter zusätzlich oder alternativ weist das Kamerasystem wenigstens zwei Wiedergabeschnittstellen auf, wobei die wenigstens zwei Wiedergabeschnittstellen elektrisch und/oder signaltechnisch und/oder mechanisch kompatibel sind. Dies ermöglicht das einfache Verbinden und Austauschen von Funktionseinheiten untereinander oder z.B. die individuelle Anpassung und Auswahl von Funktionseinheiten nach Wunsch.

Bevorzugter Weise sind, im Falle wenigstens einer Funktionsschnittstelle und wenigstens einer Aufnahmeschnittstelle, die wenigstens eine Funktionsschnittstelle und die wenigstens eine Aufnahmeschnittstelle elektrisch und/oder signal-technisch und/oder mechanisch kompatibel, oder, im Falle wenigstens einer Funktionsschnittstelle und wenigstens einer Wiedergabeschnittstelle, die wenigstens eine Funktionsschnittstelle und die wenigstens eine Wiedergabeschnittstelle elektrisch und/oder signaltechnisch und/oder mechanisch kompatibel, oder, im Falle wenigstens einer Aufnahmeschnittstelle und wenigstens einer Wiedergabeschnittstelle oder im Falle wenigstens einer Aufnahmeschnittstelle, wenigstens einer Funktionsschnittstelle und die wenigstens einer Wiedergabeschnittstelle, die wenigstens eine Aufnahmeschnittstelle und die wenigstens eine Wiedergabeschnittstelle oder die wenigstens eine Aufnahmeschnittstelle, die wenigstens eine Funktionsschnittstelle und die wenigstens eine Wiedergabeschnittstelle elektrisch und/oder signaltechnisch und/oder mechanisch kompatibel.

Vielseitige Kompatibilität der Schnittstellen untereinander ermöglicht ein einfaches Verbinden der verschiedenen Systemeinheiten über die verschiedenen Schnittstellen ohne Vorgabe einer bestimmten Steckplatzbelegung.

Die vielfältigen Schnittstellen können nach Bedarf, z.B. zum Sparen von Bauraum, direkt in die Bildaufnahmeeinheit, z.B. deren Gehäuse integriert sein.

In einer bevorzugten Ausführungsform ist die Steuereinheit in die Bildwiedergabeeinheit integriert, was nicht nur Bauraum spart und damit eine kompakte Ausbildung des gesamten Kamerasystems ermöglicht, sondern auch die Wiedergabeschnittstelle nicht erfordert und so zu einem kompakten und zuverlässigerem Kamerasystem führt. Gleichzeitig können dadurch gleiche Komponenten der Steuereinheit und der Bildwiedergabeeinheit in einer entsprechenden Komponente vorgesehen werden, was das Kamerasystem kostengünstig macht.

Vorzugsweise stellt die von der Funktionseinheit ausgeführte Fahrzeugfunktion wenigstens eine Zusatzfunktion, die keine Bildaufnahme umfasst, für die Bildaufnahmeeinheit bereit. Beispielsweise umfasst die wenigstens eine Zusatzfunktion eine Beleuchtung (sichtbare oder Infrarot (IR)-Beleuchtung) für die Bildaufnahmeeinheit zum Ausleuchten des Aufnahmebereichs der Bildaufnahmeeinheit, eine Reinigung der Optik der Bildaufnahmeeinheit zum Gewährleisten von optimalen Bildaufnahmen, eine Zusatzheizung für die Bildaufnahmeeinheit zur Verhinderung/Beseitigung von Kondenswasserbildung in der Bildaufnahmeeinheit oder eine Schutzvorrichtung, wie eine Schutzklappe (Shutter) für die Optik der Bildaufnahmeeinheit zum Schutze vor Beschädigung durch Fremdkörper. Dies hat den Vorteil, dass die Bildaufnahmeeinheit über das Aufnehmen von Bildern hinaus noch eine Vielzahl von Sonderfunktionen aufweist, die die Bildaufnahmequalität der Bildaufnahmeeinheit oder die Anpassung der Aufnahmen an gesetzliche Vorgaben weiter verbessern.

Alternativ oder zusätzlich stellt die von der Funktionseinheit ausgeführte Fahrzeugfunktion wenigstens eine Zusatzfunktion für das Fahrzeug und/oder den Fahrer des Fahrzeugs, die keine Bildaufnahme umfasst, bereit. Beispielsweise umfasst die wenigstens eine Zusatzfunktion eine Hupe, eine Beleuchtung des Fahrzeugs oder einen Abstandssensor des Fahrzeugs und kann so den Fahrer unterstützen und/oder Daten für ein Fahrerassistenzsystem liefern.

Bevorzugter Weise ist wenigstens eine der Schnittstellen gegenüber ihrer Umgebung abgedichtet. Dies verhindert das Eindringen von Fremdkörpern-/substanzen, wie Wasser, Feuchtigkeit und Schmutz, wie beispielsweise Staub, und verbessert somit die Zuverlässigkeit und Lebensdauer der Schnittstellen und gibt mehr Freiheit bezüglich ihrer Anordnung am Fahrzeug, da auf Abdichtung durch den Einbau oder die Lage an sich weniger Rücksicht genommen werden muss. Dafür kann jede Art von Dichtung für solche Schnittstellen vorgesehen werden.

Vorzugsweise ist für jede Schnittstelle eine eigene Steckverbindung vorgesehen. Dies ermöglicht einen separaten Austausch der jeweiligen Steckverbindung, beispielsweise im Falle eines Defekts der Steckverbindung, oder eine Erweiterung des Kamerasystems mit weiteren Funktions- oder Systemeinheiten über weitere Schnittstellen.

Alternativ oder zusätzlich sind mindestens zwei Schnittstellen vorgesehen und für mindestens zwei der mindestens zwei Schnittstellen ist eine gemeinsame Steckverbindung vorgesehen, was eine kompakte Ausbildung des Kamerasystems dadurch ermöglicht, dass die wenigstens zwei Schnittstellen auf kleinem Raum nahe beieinander angeordnet sind.

Vorzugsweise ist die Steckverbindung mechanisch verriegelbar. So kann verhindert werden, dass sich Kabel oder Leitungen die in die Steckverbindung bzw. deren Steckplätze eingesteckt werden, lösen wie beispielsweise durch Vibrationen oder Erschütterungen, die von dem Fahrzeug auf das Kamerasystem übertragen werden.

In einer bevorzugten Ausführungsform befinden sich die Steuereinheit und/oder die Funktionseinheit in einem gemeinsamen Gehäuse, was Bauraum spart und damit eine kompakte Ausbildung des gesamten Kamerasystems ermöglicht.

In einer anderen bevorzugten Ausführungsform bilden die Steuereinheit und/oder die Funktionseinheit und/oder die Bildaufnahmeeinheit bezüglich ihrer Gehäuse getrennte Baueinheiten, was das Kamerasystem wartungsfreundlich macht, da die die einzelnen Systemeinheiten betreffenden Bauteile gut zugänglich sind, und zudem verschiedene Anforderungen an die Gehäuse der einzelnen Systemeinheiten (Dichtigkeit, Material, etc.) leicht realisierbar macht. Vorzugsweise befinden sich die Steuereinheit und/oder die Funktionseinheit und/oder die Bildaufnahmeeinheit in diesem Fall in räumlicher bzw. unmittelbarer Nähe zueinander. Räumliche bzw. unmittelbare Nähe bedeutet vorliegend, dass zwischen den betreffenden Systemeinheit ein sehr geringer bzw. kein Abstand vorliegt. Wenn kein Abstand vorliegt, berühren sich die Gehäuse der betreffenden Systemkomponenten. Wenn ein geringer Abstand vorliegt, ist ein Abstand von wenigen Millimetern oder Zentimetern, vorzugsweise unter 0,5 m, weiter vorzugsweise unter 0,1 m und noch weiter vorzugsweise in einem Bereich von 1 bis 10 Millimetern, bevorzugt 2 bis 3 Millimeter, gemeint.

Das erfindungsgemäße Kamerasystem kann beispielsweise in Spiegelersatzsystemen für Fahrzeuge, insbesondere Nutzfahrzeuge verwendet werden, um kontinuierlich und dauerhaft Bildinformation von der Umgebung des Fahrzeugs in Echtzeit auf einer Anzeigevorrichtung im Fahrzeuginneren und/oder außerhalb des Fahrzeugs bereitzustellen.

Bevorzugte Ausführungsbeispiele der Erfindung werden nachfolgend unter Bezugnahme auf die beigefügten Zeichnungen beschrieben, wobei gleiche Bauteile mit gleichen Bezugszeichen versehen sind. Es zeigen:
Fig. 1 einen schematischen Aufbau eines Kamerasystems gemäß einer ersten Ausführungsform,
Fig. 2 einen schematischen Aufbau eines Kamerasystems gemäß einer beispielhaften zweiten Ausführungsform, die nicht Teil der beanspruchten Erfindung ist,
Fig. 3 einen schematischen Aufbau eines Kamerasystems gemäß einer dritten Ausführungsform,
Fig. 4 einen schematischen Aufbau eines Kamerasystems gemäß einer vierten Ausführungsform, und
Fig. 5 eine beispielhafte Anordnung einer Steckverbindung für verschiedene Schnittstellen eines erfindungsgemäßen Kamerasystems.

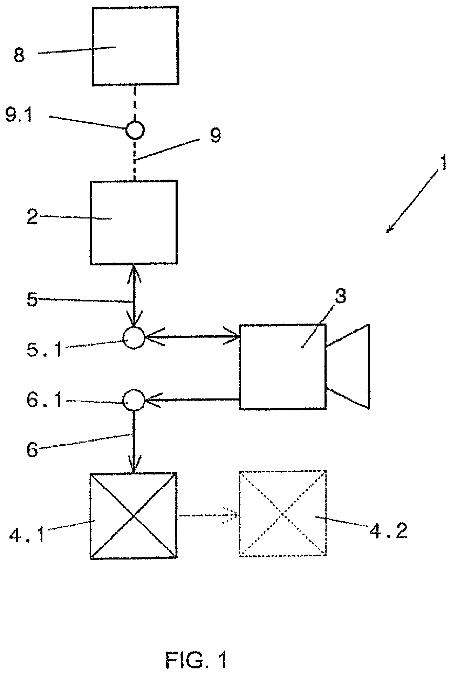

In Fig. 1 ist schematisch ein Kamerasystem 1 für ein Fahrzeug (nicht gezeigt) gemäß einer ersten Ausführungsform gezeigt. Das Kamerasystem 1 weist eine Steuereinheit 2, eine Bildaufnahmeeinheit 3, eine erste Funktionseinheit 4.1 und eine Bildwiedergabeeinheit 8 auf. Die Steuereinheit 2 dient dem Ausgeben und/oder Empfangen von Steuersignalen und Videosignalen und kann beispielsweise ein Boardcomputer oder eine ECU (electronic control unit) sein. Die Steuereinheit 2 kann als separate Systemkomponente vorgesehen sein, aber auch in dem Gehäuse der Bildaufnahmeeinheit 3 oder der Bildwiedergabeeinheit 8 vorgesehen sein. Die Bildaufnahmeeinheit 3 dient dem Aufnehmen von Bildern um ein Fahrzeug herum und/oder im Inneren eines Fahrzeugs und kann eine Kamera sein, wie beispielsweise eine Digitalkamera mit einer CCD-Technologie oder einer CMOS-Technologie oder jede andere hochauflösende Kamera. Die erste Funktionseinheit 4.1 stellt allgemein Zusatzfunktionen für die Bildaufnahmeeinheit, das Fahrzeug und/oder den Fahrer bereit und kann jede erdenkliche Einheit eines Fahrzeugs sein, der eine Funktion zugeordnet ist, die sich von der Funktion der Bildaufnahmeeinheit unterscheidet, wie beispielsweise diverse Sensoren, diverse Signalleuchten, wie ein Blinker oder ein Rückfahrscheinwerfer, oder eine Beleuchtung der Bildaufnahmeeinheit, wie ein Infrarot (IR)-Licht. Die Bildwiedergabeeinheit 8 kann eine Anzeigeeinrichtung wie ein Display oder ein Monitor sein, wie beispielsweise ein LCD-, TFT- oder LED-Monitor.

Zwischen der Bildaufnahmeeinheit 3 und der Steuereinheit 2 ist eine Aufnahmeschnittstelle 5.1 angeordnet. Die Aufnahmeschnittstelle 5.1 kann an der Bildaufnahmeeinheit 3 und/oder der Steuereinheit 2 vorgesehen sein. Die Aufnahmeschnittstelle 5.1 ist derart ausgebildet, dass sie Signale 5 der Steuereinheit 2 zu der Bildaufnahmeeinheit 3 überträgt und Signale 5 von der Bildaufnahmeeinheit 3 zu der Steuereinheit 2 überträgt. Es ist somit möglich, unter Verwendung der Aufnahmeschnittstelle 5.1 Signale 5 in beiden Richtungen zwischen der Steuereinheit 2 und der Bildaufnahmeeinheit 3 zu übertragen. Die von der Aufnahmeschnittstelle 5.1 übertragenen Signale 5 können Steuersignale und/oder Videosignale sein. Steuersignale können Signale zum Steuern der Bildaufnahmeeinheit 3 sein, wie beispielsweise ein Signal zum Ein-/Ausschalten der Bildaufnahmeeinheit bei Starten/Stoppen des Motors des Fahrzeugs oder ein Signal zum Einstellen eines bestimmten Aufnahmebereichs der Bildaufnahmeeinheit 3, wie zum Beispiel bei einer Kurvenfahrt, die durch einen Blinkvorgang angekündigt wird. Videosignale können Signale zum Übertragen von Bildern sein, die von der Bildaufnahmeeinheit 3 aufgenommen werden. Ein Videosignal ist eine serielle Anordnung elektrischer Spannungen, durch die Bildsignale (Bildhelligkeit und Farbe), Austastimpulse und Synchronsignale übertragen werden. Die Bearbeitung der über die Videosignale übermittelten Bilddaten erfolgt mittels eines Prozessors, wie beispielsweise einer CPU (central processing unit) oder einem Mikroprozessor (nicht gezeigt), der üblicherweise in der Steuereinheit angeordnet ist.

Zwischen der Bildaufnahmeeinheit 3 und der Bildwiedergabeeinheit 8 ist eine Wiedergabeschnittstelle 9.1 angeordnet. Die Wiedergabeschnittstelle 9.1 kann an der Bildaufnahmeeinheit 3 und/oder der Bildwiedergabeeinheit 8 vorgesehen sein. Die Wiedergabeschnittstelle 9.1 ist derart ausgebildet, dass sie Signale 9 der Steuereinheit 2 zu der Wiedergabeeinheit 8 überträgt und vorzugsweise auch Signale 9 von der Wiedergabeeinheit 8 zu der Steuereinheit 2 überträgt. Es ist somit möglich, unter Verwendung der Wiedergabeschnittstelle 9.1 Signale 9 zwischen der Steuereinheit 2 und der Wiedergabeeinheit 8 zu übertragen, vorzugsweise in beiden Richtungen. Die von der Wiedergabeschnittstelle 9.1 übertragenen Signale 9 können Steuersignale und/oder Videosignale sein. Steuersignale können Signale zum Steuern der Wiedergabeeinheit 8 sein, wie beispielsweise das Ein-/Ausschalten der Wiedergabeeinheit 8 oder das Einstellen eines bestimmten Anzeigebereichs der Wiedergabeeinheit 8. Videosignale können Signale zum Anzeigen der von der Bildaufnahmeeinheit 3 aufgenommenen und von dem Prozessor bearbeiteten Bilddaten sein.

Zwischen der Bildaufnahmeeinheit 3 und der Funktionseinheit 4.1 ist eine Funktionsschnittstelle 6.1 angeordnet. Die Funktionsschnittstelle 6.1 kann an der Bildaufnahmeeinheit 3 und/oder der Funktionseinheit 4.1 vorgesehen sein. Die Funktionsschnittstelle 6.1 ist derart ausgebildet, dass sie Signale 6 von der Bildaufnahmeeinheit 3 zu der Funktionseinheit 4.1 überträgt. Die von der Funktionsschnittstelle 6.1 übertragenen Signale 6 können Signale der Steuereinheit 2 sein, die zum Steuern der Bildaufnahmeeinheit 3 und der Funktionseinheit 4.1 verwendet werden. Dabei gibt die Steuereinheit 2 wenigstens ein Steuersignal aus, das über die Aufnahmeschnittstelle 5.1 an die Bildaufnahmeeinheit 3 zum Steuern der Bildaufnahmeeinheit 3 übertragen wird. Das von der Steuereinheit 3 ausgegebene Signal wird über die Funktionsschnittstelle 6.1 von der Bildaufnahmeeinheit 3 an die Funktionseinheit 4.1 zum Steuern der Funktionseinheit 6.1 übertragen bzw. weitergeleitet. Zum Steuern der Funktionseinheit 4.1 kann es erforderlich sein, dass das an die Funktionseinheit 4.1 übertragene Steuersignal in der Bildaufnahmeeinheit 3 mittels eines Prozessors (nicht gezeigt) verarbeitet bzw. umgewandelt wird. Es ist aber auch möglich, dass die Bildaufnahmeeinheit 3 und die Funktionseinheit 4.1 über dasselbe Steuersignal gesteuert werden. Somit wird die Funktionseinheit 4.1 von einem Signal gesteuert, dass durch die Bildaufnahmeeinheit 3 hindurch geht und damit von der Bildaufnahmeeinheit 3 an die Funktionseinheit 4.1 übertragen wird.

In Fig. 1 ist eine weitere Funktionseinheit 4.2 gezeigt, die mit gestrichelten Linien dargestellt ist. Das Signal der Steuereinheit 2, über das die Funktionseinheit 4.1 gesteuert wird, kann ferner dazu verwendet werden, die weitere Funktionseinheit 4.2 zu steuern. Zum Steuern der weiteren Funktionseinheit 4.2 kann es erforderlich sein, dass das an die Funktionseinheit 4.2 übertragene Steuersignal in der Funktionseinheit 4.1 mittels eines Prozessors (nicht gezeigt) verarbeitet bzw. umgewandelt wird.

Die Funktionseinheiten 4.1, 4.2 sind Einheiten bzw. Systemkomponenten, die keine Kamerafunktion, das heißt, keine Bildaufnahme, durchführen. Die Funktionseinheiten 4.1, 4.2 stellen vielmehr Zusatzfunktionen für die Bildaufnahmeeinheit 3 und/oder das Fahrzeug und/oder den Fahrer bereit. Beispielsweise können die Zusatzfunktionen der Funktionseinheiten 4.1, 4.2 eine Beleuchtung (sichtbare oder Infrarot (IR)-Beleuchtung) für die Bildaufnahmeeinheit 3 zum Ausleuchten des Aufnahmebereichs der Bildaufnahmeeinheit 3, eine Reinigung der Optik der Bildaufnahmeeinheit 3 zum Gewährleisten von optimalen Bildaufnahmen, eine Zusatzheizung für die Bildaufnahmeeinheit 3 zur Verhinderung/Beseitigung von Kondenswasserbildung in der Bildaufnahmeeinheit 3 oder eine Schutzvorrichtung, wie eine Schutzklappe (Shutter) für die Optik der Bildaufnahmeeinheit 3 zum Schutze vor Beschädigung durch Fremdkörper aufweisen. Darüber hinaus können die Zusatzfunktionen der Funktionseinheiten 4.1, 4.2 eine Hupe, eine Beleuchtung des Fahrzeugs oder einen Abstandssensor des Fahrzeugs umfassen.

Unter den Schnittstellen, d.h. der Aufnahmeschnittstelle 5.1, den Funktionsschnittstellen 6.1 und der Wiedergabeschnittstelle 9.1 sind dabei Einrichtungen zu verstehen, mit denen zwei Teilsysteme mechanisch und signaltechnisch gekoppelt werden können, also z.B. Stecker und zugehörige Buchse mit den entsprechenden Steckplätzen und/oder Polen.

Die Funktionsweise des Kamerasystems 1 gemäß der ersten Ausführungsform wird nachfolgend anhand eines Beispiels erläutert, in dem die Funktionseinheit 4.1 ein Lichtsensor der Bildaufnahmeeinheit 3 und die Funktionseinheit 4.2 eine IR-Beleuchtung der Bildaufnahmeeinheit 3 ist. Aufgabe des Lichtsensors 4.1 ist es, die Lichtmenge im Aufnahmebereich der Bildaufnahmeeinheit 3 zu detektieren und im Falle einer Unterschreitung eines vorgegebenen Grenzwerts für eine Beleuchtungsstärke (gemessen in der SI-Einheit Lux) ein Signal zum Einschalten einer Beleuchtung, nämlich einer IR-Beleuchtung der Bildaufnahmeeinheit 3 auszugeben. Sobald die Steuereinheit 2 beim Starten des Motors des Fahrzeugs ein Steuersignal zum Anschalten der Bildaufnahmeeinheit 3 ausgibt, wird dieses Steuersignal - ggf. nach Bearbeitung durch einen Prozessor in der Bildaufnahmeeinheit 3 - auch zum Steuern des Lichtsensors 4.1 verwendet. Ermittelt der Lichtsensor 4.1, dass im Aufnahmebereich der Bildaufnahmeeinheit 3 eine Lichtmenge bzw. Beleuchtungsstärke vorhanden ist, die eine Beleuchtung der Bildaufnahmeeinheit 3 erfordert, um geeignete Bilder von zum Beispiel der Umgebung des Fahrzeugs aufnehmen zu können, gibt der Lichtsensor 4.1. ein Signal aus, das ein Anschalten der IR-Beleuchtung 4.2 bewirkt. Auf diese Art und Weise kann ein einziges Steuersignal zum Steuern von sowohl der Bildaufnahmeeinheit 3 als auch den Funktionseinheiten 4.1, 4.2 verwendet werden. Dies ermöglicht einen einfachen und zugleich kompakten Aufbau des erfindungsgemäßen Kamerasystems 1 mit reduzierten Systemkosten, da Kabel bzw. Leitungen und Steuerelektronikmodule gegenüber herkömmlichen Kamerasystemen eingespart bzw. reduziert sind.

Allgemein erfolgt die Steuerung der Bildaufnahmeeinheit 3 sowie der Funktionseinheiten 4.1, 4.2 somit über einen Fahrzeugbus, wie beispielsweise CAN, LIN, Ethernet oder andere Bussysteme und damit über ein System zur Datenübertragung zwischen mehreren Teilnehmern, hier die Steuereinheit 2, die Bildaufnahmeeinheit 3, die erste Funktionseinheit 4.1 und die Bildwiedergabeeinheit 8, über einen gemeinsamen Übertragungsweg. Die Bildaufnahmeeinheit 3 und die Funktionseinheiten 4.1, 4.2 sind folglich derart ausgebildet, dass sie miteinander gekoppelt sind. Beispielsweise kann diese Kopplung hinsichtlich der Funktion der Bildaufnahmeeinheit 3 und der Funktionseinheiten 4.1, 4.2 erfolgen. Wenigstens die Bildaufnahmeeinheit 3 kann aber auch ohne die Funktionseinheiten 4.1, 4.2 betrieben werden. Bezugnehmend auf das obige Beispiel kann die Bildaufnahmeeinheit 3 demnach auch weiter funktionieren, selbst wenn die IR-Beleuchtung und/oder der Lichtsensor defekt sind. Damit sind die Bildaufnahmeeinheit 3 und die Funktionseinheiten 4.1, 4.2 voneinander entkoppelbar.

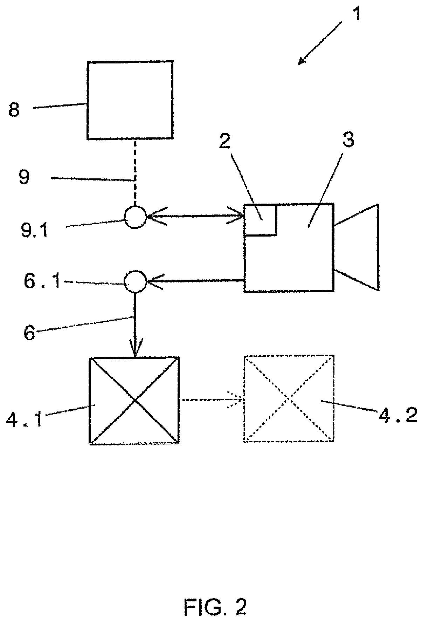

In Fig. 2 ist eine beispielhafte zweite Ausführungsform eines erfindungsgemäßen Kamerasystems 1 gezeigt, die nicht Teil der beanspruchten Erfindung ist. Dabei unterscheidet sich die in Fig. 2 gezeigte zweite Ausführungsform von der in Fig. 1 gezeigten ersten Ausführungsform dadurch, dass die Steuereinheit 2 in die Bildaufnahmeeinheit 3 integriert ist. Somit ist nur noch eine Wiedergabeschnittstelle 9.1. zwischen der Bildaufnahmeeinheit 3 und der Bildwiedergabeeinheit 8 vorhanden, die geeignet ist, wenigstens ein Videosignal zu übertragen. Alternativ kann die Steuereinheit 2 auch in der Wiedergabeeinheit 8 integriert sein (nicht gezeigt). In diesem Fall ist nur noch die Aufnahmeschnittstelle 5.1 zwischen der der Bildaufnahmeeinheit 3 und der Bildwiedergabeeinheit 8 vorhanden, die geeignet ist, sowohl wenigstens ein Videosignal als auch wenigstens ein Steuersignal zu übertragen.

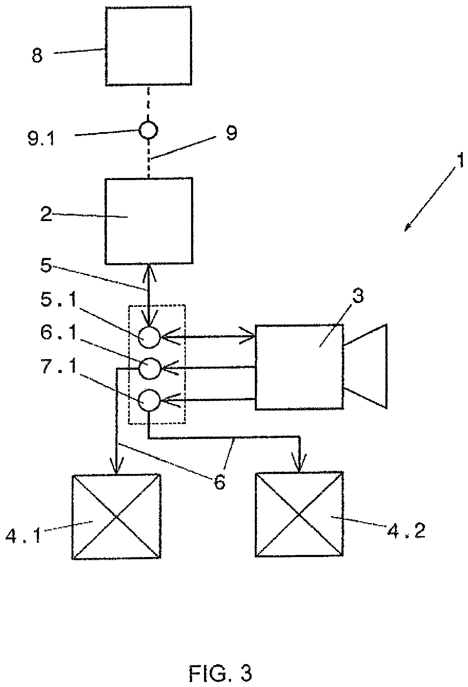

In Fig. 3 ist eine dritte Ausführungsform eines erfindungsgemäßen Kamerasystems 1 gezeigt. Dabei unterscheidet sich die in Fig. 3 gezeigte dritte Ausführungsform von der in Fig. 1 gezeigten ersten Ausführungsform dadurch, dass die zweite Funktionseinheit 4.2. nicht über ein Signal angesteuert wird, das über die erste Funktionseinheit 4.1 an die zweite Funktionseinheit 4.2 weitergegeben wird, sondern mittels eines Signals der Steuereinheit 2, das über eine weitere, zweite Funktionsschnittstelle 7.1 übertragen wird. Die Funktionsschnittstelle 4.1 wird in diesem Fall als erste Funktionsschnittstelle 4.1 bezeichnet. Die Signalübertragung von der Steuereinheit 2 über die Bildaufnahmeeinheit 3 an die Funktionsschnittstelle 4.2 erfolgt auf dieselbe Art und Weise wie von der Steuereinheit 2 über die Bildaufnahmeeinheit 3 an die erste Funktionsschnittstelle 4.1, die oben in Bezug auf die erste Ausführungsform beschrieben ist.

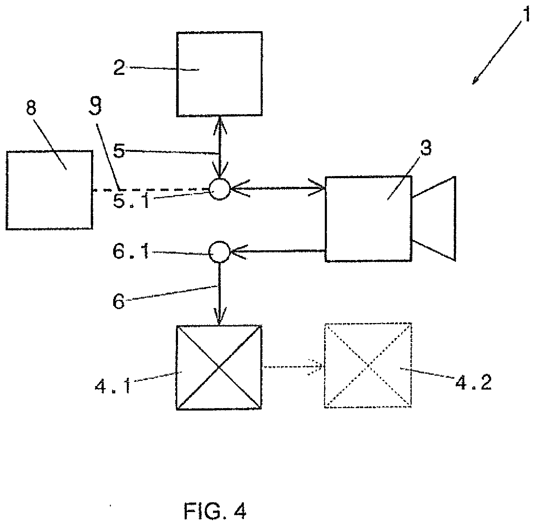

In Fig. 4 ist eine vierte Ausführungsform eines erfindungsgemäßen Kamerasystems 1 gezeigt. Dabei unterscheidet sich die in Fig. 4 gezeigte vierte Ausführungsform von der in Fig. 1 gezeigten ersten Ausführungsform dadurch, dass die Bildwiedergabeeinheit 8 direkt über die Aufnahmeschnittstelle 5.1 mit der Bildaufnahmeeinheit 3 verbunden ist. Bei der in Fig. 4 gezeigten Ausführungsform dient die Schnittstelle 5.1 dem Übertragen und/oder Empfangen von Steuersignalen an die bzw. von der Steuereinheit 2 und gleichzeitig dem Übertragen von Videosignalen von der Bildaufnahmeeinheit 3 an die Bildwiedergabeeinheit 8. Es ist allerdings auch denkbar, dass die Übertragung von Steuersignalen und Videosignalen über separate Schnittstellen erfolgt.
Den in Fig. 1 bis Fig. 4 gezeigten Ausführungsformen ist gemeinsam, dass sie wenigstens eine erste Funktionsschnittstelle 6.1, die geeignet ist, ein Steuersignal 6 von der Bildaufnahmeeinheit 3 an die erste Funktionseinheit 4.1 zu übertragen, und wenigstens eine Wiedergabeschnittstelle 9.1 aufweisen, die geeignet ist, ein Videosignal 9 von der Steuereinheit 2 (Fig. 1 und 3) oder der Bildaufnahmeeinheit 3 (Fig. 2 und 4) an die Bildwiedergabeeinheit zu übertragen. Die in Fig. 1 und Fig. 3 gezeigte Aufnahmeschnittstelle 5.1 ist geeignet, Signale in beide Richtungen zu übertragen, nämlich wenigstens ein Videosignal von der Bildaufnahmeeinheit 3 zu der Steuereinheit 2 und wenigstens ein Steuersignal von der Steuereinheit 2 zu der Bildaufnahmeeinheit 3. Es ist aber auch denkbar, dass auch die Schnittstellen 9.1 und 6.1, 7.1 geeignet sind, Signale in beiden Richtungen zu übertragen.

Auch wenn in Fig. 1, 3 und 4 lediglich eine Aufnahmeschnittstelle 5.1 und in Fig. 1 bis 3 lediglich eine Wiedergabeschnittstelle 9.1 gezeigt sind, ist es denkbar mehr als eine Aufnahmeschnittstelle 5.1 und eine Wiedergabeschnittstelle 9.1 ist den erfindungsgemäßen Kamerasystemen vorzusehen. Ferner ist es denkbar, dass die Funktionsschnittstellen 6.1 der erfindungsgemäßen Kamerasysteme 1 auch Signale von der Funktionseinheit 4.1 zu der Bildaufnahmeeinheit 3 übertragen und damit eine Signalübertragung in beiden Richtungen zwischen der Bildaufnahmeeinheit 3 und der Funktionseinheit 4.1 ermöglichen.

Die Übertragung von Videosignalen erfolgt in Fig, 1 und 3 von der Steuereinheit 2 zu der Bildwiedergabeeinheit 8 und in Fig. 2 und 4 von der Bildaufnahmeeinheit 3 zu der Bildwiedergabeeinheit 8. Zusätzlich kann die Bildwiedergabeeinheit derart ausgebildet sein, dass sie Videosignale und/oder andere Signale an die Steuereinheit 2 bzw. die Bildaufnahmeeinheit 3 ausgibt.

Ferner sind beliebig viele Funktionseinheiten 4.1, 4.2 ... 4.n in die erfindungsgemäßen Kamerasysteme 1 integrierbar und nachrüstbar.

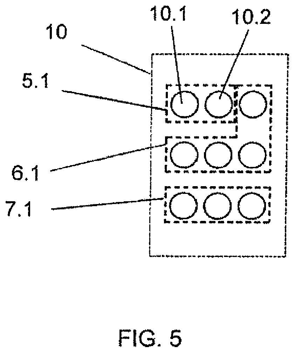

Die Schnittstellen 5.1, 6.1 und 9.1 können Steckverbindungen sein. In Fig. 5 ist ein Beispiel für eine Steckverbindung 10 der Schnittstellen 5.1, 6.1 und 7.1 gezeigt. Die in Fig. 5 gezeigte Steckverbindung 10 weist neun Steckplätze 10.1, 10.2, ... 10.9 (nur Steckplätze 10.1, 10.2 beziffert) auf. In die Steckplätze 10.1, 10.2, ... 10.9 können die Stecker der verschiedenen Systemeinheiten, das heißt, der Steuereinheit 2, der Aufnahmeeinheit 3 und/oder der Funktionseinheit 4.1, 4.2 eingesteckt werden, wobei jeweils drei Steckplätze in einer Reihe angeordnet sind und die Steckverbindung entsprechend drei Reihen mit jeweils drei Steckplätzen aufweist. In der ersten Reihe der Steckverbindung (die in Fig. 5 gezeigte oberste Reihe der Steckplätze) sind zwei Steckplätze für die Gruppe von Videosignalen, die über die Aufnahmeschnittstelle 5.1 übertragen werden, vorgesehen. Die Steckplätze für Übertragung der Videosignale können nebeneinander liegen, wahlweise links (wie in Fig. 5 gezeigt) oder rechts oder aber auch voneinander getrennt angeordnet sein. Der in der ersten Reihe verbleibende Steckplatz ist in Fig. 5 zusammen mit der in der zweiten Reihe (mittlere Reihe von Steckplätzen in Fig. 5) für die Übertragung von Signalen, die über die erste Funktionsschnittstelle 6.1 übertragen werden, vorgesehen. In der dritten Reihe (unterste Reihe von Steckplätzen in Fig. 5) sind ausschließlich Steckplätze für die Übertragung von Signalen, die über die zweite Funktionsschnittstelle 7.1 übertragen werden, vorgesehen. Wenn auch nicht in Fig. 5 gezeigt, kann die Steckverbindung noch weitere Steckplätze oder weitere Reihen an Steckplätzen für beispielsweise die Wiedergabeschnittstelle 9.1 für die Übertragung von Signalen zu und/oder von der Bildwiedergabeeinheit 8 und/oder für weitere Funktionseinheiten 4.3, 4.4, ... 4.n aufweisen.

Die Schnittstellen 5.1, 6.1, 7.1, 9.1 können, wie in Fig. 5 gezeigt, in einer gemeinsamen Steckverbindung 10 vorgesehen sein. Es ist aber auch denkbar, nur die Funktionsschnittstelle 6.1 und die Aufnahmeschnittstelle 5.1 oder die Funktionsschnittstelle 6.1 und die Wiedergabeschnittstelle 9.1 oder die Aufnahmeschnittstelle 5.1 und die Wiedergabeschnittstelle 9.1 in einer gemeinsamen Steckverbindung vorzusehen und die jeweilige verbleibende Schnittstelle in einer von der gemeinsamen Steckverbindung getrennten Steckverbindung vorzusehen. Alternativ kann jede der Schnittstellen 5.1, 6.1, 7.1, 9.1 aber auch als eigene Steckverbindung vorgesehen sein. Auch können mehr oder weniger als neun Steckplätze in einer Steckverbindung vorgesehen sein. Die Schnittstellen 5.1, 6.1, 7.1, 9.1 sind derart ausgebildet, dass sie gegen das Eindringen von Wasser, Feuchtigkeit und Schmutz, wie beispielsweise Staub, mittels einer entsprechenden Dichteinrichtung geschützt sind, was die Zuverlässigkeit der Schnittstellen 5.1, 6.1, 7.1, 9.1 und ihre Lebensdauer verbessert. Ferner sind die Schnittstellen 5.1, 6.1, 7.1, 9.1 elektrisch, wie beispielsweise über die Pinbelegung und/oder die Signalart (signaltechnisch), und/oder mechanisch, wie beispielsweise über die Steckergeometrie, kompatibel. Beispielsweise können alle Schnittstellen wenigstens eines Typs, das heißt, wenigstens alle Funktionsschnittstellen 6.1, wenigstens alle Wiedergabeschnittstellen 9.1 oder wenigstens alle Aufnahmeschnittstellen 5.1, elektrisch und/oder signaltechnisch und/oder mechanisch kompatibel sein. Ferner können die einzelnen Schnittstellen 5.1, 6.1, 9.1 aber auch untereinander in allen denkbaren Kombinationen elektrisch und/oder signaltechnisch und/oder mechanisch kompatibel sein. Dies ermöglicht eine flexible Nutzung der verschiedenen Steckverbindungen, unabhängig von dem Aufbau des Kamerasystems 1. Die Steckverbindung 10 insgesamt und/oder die einzelnen Steckplätze 10.1, 10.2, ... der Steckverbindung 10 können mechanisch verriegelbar sein, so dass ein Lösen von in die Steckplätze eingesteckten Kabeln verhindert wird.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen.

### Bezugszeichenliste

- 1: Kamerasystem
- 2: Steuereinheit
- 3: Bildaufnahmeeinheit
- 4.1: erste Funktionseinheit
- 4.2: zweite Funktionseinheit
- 4.n: n-te Funktionseinheit
- 5: Steuer-/Videosignal
- 5.1: Aufnahmeschnittstelle
- 6: Steuersignal
- 6.1: erste Funktionsschnittstelle
- 7.1: zweite Funktionsschnittstelle
- 8: Bildwiedergabeeinheit
- 9: Videosignal
- 9.1: Wiedergabeschnittstelle
- 10: Steckverbindung
- 10.1, 10.2,...: Steckplätze

## Patentansprüche

1. Kamerasystem (1) für ein Fahrzeug, insbesondere ein Nutzfahrzeug, enthaltend:
wenigstens eine Bildaufnahmeeinheit (3) zum Aufnehmen wenigstens eines Bildes,
wenigstens eine Bildwiedergabeeinheit (8) zum Wiedergeben des wenigstens einen von der Bildaufnahmeeinheit (3) aufgenommenen Bildes;
wenigstens eine Funktionseinheit (4.1, 4.2) zum Ausführen einer Fahrzeugfunktion, und
wenigstens eine Steuereinheit (2) zum Ausgeben von wenigstens einem Steuersignal,
wobei das Kamerasystem (1) angepasst ist, wenigstens ein Videosignal zwischen der Bildaufnahmeeinheit (3) und der Bildwiedergabeeinheit (8) zu übertragen, und angepasst ist, die Bildaufnahmeeinheit (3) und die Funktionseinheit (4.1, 4.2) von einem aus der Steuereinheit (2) ausgegebenen Steuersignal zu steuern, und
wobei wenigstens eine Funktionsschnittstelle (6.1) zwischen der wenigsten einen Bildaufnahmeeinheit (3) und der wenigstens einen Funktionseinheit (4.1, 4.2) vorgesehen ist, über die die wenigstens eine Bildaufnahmeeinheit (3) und die wenigstens eine Funktionseinheit (4.1, 4.2) miteinander koppelbar und voneinander entkoppelbar sind,
**dadurch gekennzeichnet, dass** das aus der Steuereinheit (2) ausgegebene Steuersignal durch die Bildaufnahmeeinheit (3) hindurch zu der Funktionseinheit (4.1, 4.2) übertragen wird.

2. Kamerasystem (1) nach Anspruch 1, enthaltend wenigstens zwei Funktionsschnittstellen (6.1, 7.1), wobei die wenigstens zwei Funktionsschnittstellen (6.1, 7.1) elektrisch und/oder signaltechnisch und/oder mechanisch kompatibel sind.

3. Kamerasystem (1) nach Anspruch 1 oder 2, wobei die wenigstens eine Steuereinheit (2) angepasst ist zum Ausgeben und Empfangen von wenigstens einem Videosignal.

4. Kamerasystem (1) nach Anspruch 3, wobei wenigstens eine Aufnahmeschnittstelle (5.1) zwischen der Steuereinheit (2) und der Bildaufnahmeeinheit (3) vorgesehen ist, die angepasst ist zum Übertragen des wenigstens einen Videosignals von der Bildaufnahmeeinheit (3) zu der Steuereinheit (2) und zum Übertragen wenigstens eines Steuersignals von der Steuereinheit (2) zu der Bildaufnahmeeinheit (3).

5. Kamerasystem (1) nach Anspruch 1 oder 2, wobei wenigstens eine Aufnahmeschnittstelle (5.1) zwischen der Bildaufnahmeeinheit (3) und der Bildwiedergabeeinheit (8) vorgesehen ist, die angepasst ist zum Übertragen des wenigstens einen Videosignals von der Bildaufnahmeeinheit (3) zu der Bildwiedergabeeinheit (8) und zum Übertragen wenigstens eines Steuersignals von der Bildwiedergabeeinheit (8) zu der Bildaufnahmeeinheit (3), wobei bevorzugt wenigstens zwei Schnittstellen (5.1) zum getrennten Übertragen von Steuersignalen an die wenigstens eine Steuereinheit (2) und von Videosignalen an die Bildwiedergabeeinheit (8) vorgesehen sind, oder wobei bevorzugt wenigstens eine gemeinsame Schnittstelle (5.1) zum Übertragen von Steuersignalen an die wenigstens eine Steuereinheit (2) und von Videosignalen an die wenigstens eine Bildwiedergabeeinheit (8) vorgesehen ist.

6. Kamerasystem (1) nach Anspruch 4, enthaltend wenigstens zwei Aufnahmeschnittstellen (5.1), wobei die wenigstens zwei Aufnahmeschnittstellen (5.1) elektrisch und/oder signaltechnisch und/oder mechanisch kompatibel sind.

7. Kamerasystem (1) nach einem der Ansprüche 1 bis 4, ferner enthaltend wenigstens eine Wiedergabeschnittstelle (9.1) zwischen der Steuereinheit (2) und der Bildwiedergabeeinheit (8), die angepasst ist zum Übertragen wenigstens eines Videosignals von der Steuereinheit (2) zu der Bildwiedergabeeinheit (8), bevorzugt enthaltend wenigstens zwei Wiedergabeschnittstellen (9.1), wobei die wenigstens zwei Wiedergabeschnittstellen (9.1) elektrisch und/oder signaltechnisch und/oder mechanisch kompatibel sind.

8. Kamerasystem (1) nach einem der Ansprüche 4, 6 und 7,
wobei die wenigstens eine Funktionsschnittstelle (6.1) und die wenigstens eine Aufnahmeschnittstelle (5.1), wenn rückbezogen auf Anspruch 4 oder 6, elektrisch und/oder signaltechnisch und/oder mechanisch kompatibel sind, oder
wobei die wenigstens eine Funktionsschnittstelle (6.1) und die wenigstens eine Wiedergabeschnittstelle (9.1), wenn rückbezogen auf Anspruch 7, elektrisch und/oder signaltechnisch und/oder mechanisch kompatibel sind, oder
wobei die wenigstens eine Aufnahmeschnittstelle (5.1) und die wenigstens eine Wiedergabeschnittstelle (9.1) oder die wenigstens eine Aufnahmeschnittstelle (5.1), die wenigstens eine Funktionsschnittstelle (6.1) und die wenigstens eine Wiedergabeschnittstelle (9.1), wenn rückbezogen auf Anspruch 4 oder 6 und Anspruch 7, elektrisch und/oder signaltechnisch und/oder mechanisch kompatibel sind.

9. Kamerasystem (1) nach einem der vorangehenden Ansprüche, wobei die von der Funktionseinheit (4.1, 4.2) ausgeführte Fahrzeugfunktion wenigstens eine Zusatzfunktion für die Bildaufnahmeeinheit (3), die keine Bildaufnahme umfasst, bereitstellt und/oder wobei die von der Funktionseinheit (4.1, 4.2) ausgeführte Fahrzeugfunktion wenigstens eine Zusatzfunktion für das Fahrzeug und/oder den Fahrer des Fahrzeugs, die keine Bildaufnahme umfasst, bereitstellt.

10. Kamerasystem (1) nach einem der vorangehenden Ansprüche, wobei wenigstens eine der Schnittstellen (5.1, 6.1, 9.1) gegenüber der Umgebung abgedichtet ist, und/oder wobei für jede Schnittstelle (5.1, 6.1, 9.1) eine eigene Steckverbindung vorgesehen ist.

11. Kamerasystem (1) nach einem der Ansprüche 4 bis 7, wobei mindestens zwei Schnittstellen (5.1, 6.1, 9.1) vorgesehen sind und für mindestens zwei der mindestens zwei Schnittstellen (5.1, 6.1, 9.1) eine gemeinsame Steckverbindung vorgesehen ist.

12. Kamerasystem (1) nach Anspruch 10 oder 11, wobei die Steckverbindung mechanisch verriegelbar ist.

13. Kamerasystem (1) nach Anspruch 1 bis 4, wobei sich die Steuereinheit (2) und die Funktionseinheit (4.1, 4.2) in einem gemeinsamen Gehäuse befinden, oder wobei die Steuereinheit (2) und die Funktionseinheit (4.1, 4.2) oder die Steuereinheit (2) und die Bildaufnahmeeinheit (3) oder die Funktionseinheit (4.1, 4.2) und die Bildaufnahmeeinheit (3) oder die Steuereinheit (2), die Funktionseinheit (4.1, 4.2) und die Bildaufnahmeeinheit (3) bezüglich ihrer Gehäuse getrennte Baueinheiten bilden.

14. Kamerasystem (1) nach einem der vorangehenden Ansprüche, wobei die Steuereinheit (2) in die Bildwiedergabeeinheit (8) integriert ist.

15. Spiegelersatzsystem für ein Fahrzeug, insbesondere ein Nutzfahrzeug, das ein Kamerasystem (1) nach einem der Ansprüche 1 bis 14 aufweist.

## Claims

1. Camera system (1) for a vehicle, in particular a commercial vehicle, comprising at least one image capture unit (3) for capturing at least one image,
at least one image reproduction unit (8) for reproducing the at least one image captured by the image capture unit (3);
at least one functional unit (4.1, 4.2) for performing a vehicle function, and
at least one control unit (2) for outputting at least one control signal,
wherein the camera system (1) is configured to transmit at least one video signal between the image capture unit (3) and the image reproduction unit (8) and is configured to control the image capture unit (3) and the functional unit (4.1, 4.2) by use of a control signal outputted from the control unit (2), and
wherein at least one functional interface (6.1) is provided between the at least one image capture unit (3) and the at least one functional unit (4.1, 4.2), via which functional interface (6.1) the at least one image capture unit (3) and the at least one functional unit (4.1, 4.2) are coupleable with each other and decoupleable from each other,
**characterized in that** the control signal outputted from the control unit (2) is transmitted through the image capture unit (3) to the functional unit (4.1. 4.2).

2. Camera system (1) according to claim 1, comprising at least two functional interfaces (6.1, 7.1), wherein the at least two functional interfaces (6.1, 7.1) are electrically and/or signal-technically and/or mechanically compatible.

3. Camera system (1) according to claim 1 or 2, wherein the at least one control unit (2) is configured to output and receive at least one video signal.

4. Camera system (1) according to claim 3, wherein at least one capture interface (5.1) is provided between the control unit (2) and the image capture unit (3), which capture interface (5.1) is configured for transmitting the at least one video signal from the image capture unit (3) to the control unit (2) and for transmitting at least one control signal from the control unit (2) to the image capture unit (3).

5. Camera system (1) according to claim 1 or 2, wherein at least one capture interface (5.1) is provided between the image capture unit (3) and the image reproduction (8), which capture interface (5.1) is configured for transmitting the at least one video signal from the image capture unit (3) to the image reproduction unit (8) and for transmitting at least one control signal from the image reproduction unit (8) to the image capture unit (3), wherein preferably at least two interfaces (5.1) for separately transmitting control signals to the at least one control unit (2) and video signals to the image reproduction unit (8) are provided, or wherein preferably at least one common interface (5.1) for transmitting control signals to the at least one control unit (2) and video signals to the at least one image reproduction unit (8) are provided.

6. Camera system (1) according to claim 4, comprising at least two capture interfaces (5.1), wherein the at least two capture interfaces (5.1) are electrically and/or signal-technically and/or mechanically compatible.

7. Camera system (1) according to any one of claims 1 to 4, further comprising at least one reproduction interface (9.1) between the control unit (2) and the image reproduction unit (8), which is configured for transmitting at least one video signal from the control unit (2) to the image reproduction unit (8), preferably comprising at least two reproduction interfaces (9.1) wherein the at least two reproduction interfaces (9.1) are electrically and/or signal-technically and/or mechanically compatible.

8. Camera system (1) according to any one of claims 4, 6 and 7,
wherein the at least one functional interface (6.1) and the at least one capture interface (5.1), if dependent on claim 4 or 6, are electrically and/or signal-technically and/or mechanically compatible, or
wherein the at least one functional interface (6.1) and the at least one reproduction interface (9.1), if dependent on claim 7, are electrically and/or signal-technically and/or mechanically compatible, or
wherein the at least one capture interface (5.1) and the at least one reproduction interface (9.1) or the at least one capture interface (5.1), the at least one functional interface (6.1) and the at least one reproduction interface (9.1), if dependent on claim 4 or 6 and claim 7, are electrically and/or signal-technically and/or mechanically compatible.

9. Camera system (1) according to any one of the preceding claims, wherein the vehicle function performed by the functional unit (4.1, 4.2) provides at least one additional function for the image capture unit (3), which additional function does not comprise image capturing and/or wherein the vehicle function performed by the functional unit (4.1, 4.2) provides at least one additional function for the vehicle and/or the driver of the vehicle, which additional function does not comprise image capturing.

10. Camera system (1) according to any one of the preceding claims, wherein at least one of the interfaces (5.1, 6.1, 9.1) is sealed against the environment, and/or wherein for each interface (5.1, 6.1, 9.1) an individual plug-in connection is provided.

11. Camera system (1) according to any one of claims 4 to 7, wherein at least two interfaces (5.1, 6.1, 9.1) are provided and a common plug-in connection is provided for at least two of the at least two interfaces (5.1, 6.1, 9.1).

12. Camera system (1) according to claim 10 or 11, wherein the plug-in connection is mechanically lockable.

13. Camera system (1) according to claim 1 to 4, wherein the control unit (2) and the functional unit (4.1, 4.2) are disposed in a common housing, or wherein the control unit (2) and the functional unit (4.1, 4.2) or the control unit (2) and the image capture unit (3) or the functional unit (4.1, 4.2) and the image capture unit (3) or the control unit (2), the functional unit (4.1, 4.2) and the control unit (2) form separated assemblies with respect to their housings.

14. Camera system (1) according to any one of the preceding claims, wherein the control unit (2) is integrated in the image reproduction unit (8).

15. Mirror replacement system for a vehicle, in particular a commercial vehicle, having a camera system (1) according to any one of the claims 1 to 14.

## Revendications

1. Système de caméra (1) pour un véhicule, en particulier un véhicule utilitaire, contenant :
au moins une unité de prise d'image (3) pour la prise d'au moins une image,
au moins une unité de reproduction d'image (8) pour la reproduction de l'au moins une image prise par l'unité de prise d'image (3) ;
au moins une unité fonctionnelle (4.1, 4.2) pour la réalisation d'une fonction de véhicule, et
au moins une unité de commande (2) pour l'émission d'au moins un signal de commande,
dans lequel le système de caméra (1) est adapté pour transmettre au moins un signal vidéo entre l'unité de prise d'image (3) et l'unité de reproduction d'image (8), et est adapté pour commander l'unité de prise d'image (3) et l'unité fonctionnelle (4.1, 4.2) par un signal de commande émis à partir de l'unité de commande (2), et
dans lequel au moins une interface fonctionnelle (6.1) est prévue entre l'au moins une unité de prise d'image (3) et l'au moins une unité fonctionnelle (4.1, 4.2), par le biais de laquelle l'au moins une unité de prise d'image (3) et l'au moins une unité fonctionnelle (4.1, 4.2) peuvent être couplées l'une à l'autre et découplées l'une de l'autre,
**caractérisé en ce que** le signal de commande émis à partir de l'unité de commande (2) est transmis à travers l'unité de prise d'image (3) à l'unité fonctionnelle (4.1, 4.2).

2. Système de caméra (1) selon la revendication 1, contenant au moins deux interfaces fonctionnelles (6.1, 7.1), dans lequel les au moins deux interfaces fonctionnelles (6.1, 7.1) sont compatibles du point de vue électrique et/ou de la technique des signaux et/ou mécanique.

3. Système de caméra (1) selon la revendication 1 ou 2, dans lequel l'au moins une unité de commande (2) est adaptée à l'émission et à la réception d'au moins un signal vidéo.

4. Système de caméra (1) selon la revendication 3, dans lequel au moins une interface de réception (5.1) est prévue entre l'unité de commande (2) et l'unité de prise d'image (3), qui est adaptée à la transmission de l'au moins un signal vidéo de l'unité de prise d'image (3) à l'unité de commande (2) et à la transmission d'au moins un signal de commande de l'unité de commande (2) à l'unité de prise d'image (3).

5. Système de caméra (1) selon la revendication 1 ou 2, dans lequel au moins une interface de réception (5.1) est prévue entre l'unité de prise d'image (3) et l'unité de reproduction d'image (8), qui est adaptée à la transmission de l'au moins un signal vidéo de l'unité de prise d'image (3) à l'unité de reproduction d'image (8) et à la transmission d'au moins un signal de commande de l'unité de reproduction d'image (8) à l'unité de prise d'image (3), dans lequel de préférence au moins deux interfaces (5.1) sont prévues pour la transmission séparée de signaux de commande à l'au moins une unité de commande (2) et de signaux vidéo à l'unité de reproduction d'image (8), ou dans lequel de préférence au moins une interface commune (5.1) est prévue pour la transmission de signaux de commande à l'au moins une unité de commande (2) et de signaux vidéo à l'au moins une unité de reproduction d'image (8).

6. Système de caméra (1) selon la revendication 4, contenant au moins deux interfaces de réception (5.1), dans lequel les au moins deux interfaces de réception (5.1) sont compatibles du point de vue électrique et/ou de la technique des signaux et/ou mécanique.

7. Système de caméra (1) selon l'une quelconque des revendications 1 à 4, contenant en outre au moins une interface de reproduction (9.1) entre l'unité de commande (2) et l'unité de reproduction d'image (8), qui est adaptée à la transmission d'au moins un signal vidéo de l'unité de commande (2) à l'unité de reproduction d'image (8), de préférence contenant au moins deux interfaces de reproduction (9.1), dans lequel les au moins deux interfaces de reproduction (9.1) sont compatibles du point de vue électrique et/ou de la technique des signaux et/ou mécanique.

8. Système de caméra (1) selon l'une quelconque des revendications 4, 6 et 7,
dans lequel l'au moins une interface fonctionnelle (6.1) et l'au moins une interface de réception (5.1), lorsqu'il est fait référence à la revendication 4 ou 6, sont compatibles du point de vue électrique et/ou de la technique des signaux et/ou mécanique, ou
dans lequel l'au moins une interface fonctionnelle (6.1) et l'au moins une interface de reproduction (9.1), lorsqu'il est fait référence à la revendication 7, sont compatibles du point de vue électrique et/ou de la technique des signaux et/ou mécanique, ou
dans lequel l'au moins une interface de réception (5.1) et l'au moins une interface de reproduction (9.1) ou l'au moins une interface de réception (5.1), l'au moins une interface fonctionnelle (6.1) et l'au moins une interface de reproduction (9.1), lorsqu'il est fait référence à la revendication 4 ou 6 et à la revendication 7, sont compatibles du point de vue électrique et/ou de la technique des signaux et/ou mécanique.

9. Système de caméra (1) selon l'une quelconque des revendications précédentes, dans lequel la fonction de véhicule réalisée par l'unité fonctionnelle (4.1, 4.2) met à disposition au moins une fonction supplémentaire pour l'unité de prise d'image (3), qui ne comprend pas de prise d'image, et/ou dans lequel la fonction de véhicule réalisée par l'unité fonctionnelle (4.1, 4.2) met à disposition au moins une fonction supplémentaire pour le véhicule et/ou le conducteur du véhicule, qui ne comprend pas de prise d'image.

10. Système de caméra (1) selon l'une quelconque des revendications précédentes, dans lequel au moins une des interfaces (5.1, 6.1, 9.1) est étanchée par rapport à l'environnement, et/ou dans lequel une propre connexion enfichable est prévue pour chaque interface (5.1, 6.1, 9.1).

11. Système de caméra (1) selon l'une quelconque des revendications 4 à 7, dans lequel au moins deux interfaces (5.1, 6.1, 9.1) sont prévues et une connexion enfichable commune est prévue pour au moins deux des au moins deux interfaces (5.1, 6.1, 9.1).

12. Système de caméra (1) selon la revendication 10 ou 11, dans lequel la connexion enfichable est verrouillable mécaniquement.

13. Système de caméra (1) selon la revendication 1 à 4, dans lequel l'unité de commande (2) et l'unité fonctionnelle (4.1, 4.2) se trouvent dans un boîtier commun, ou dans lequel l'unité de commande (2) et l'unité fonctionnelle (4.1, 4.2) ou l'unité de commande (2) et l'unité de prise d'image (3) ou l'unité fonctionnelle (4.1, 4.2) et l'unité de prise d'image (3) ou l'unité de commande (2), l'unité fonctionnelle (4.1, 4.2) et l'unité de prise d'image (3) forment des unités modulaires séparées par rapport à leur boîtier.

14. Système de caméra (1) selon l'une quelconque des revendications précédentes, dans lequel l'unité de commande (2) est intégrée dans l'unité de reproduction d'image (8).

15. Système de remplacement de miroir pour un véhicule, en particulier un véhicule utilitaire, qui présente un système de caméra (1) selon l'une quelconque des revendications 1 à 14.
